(19) Europäisches Patentamt
European Patent Office
Office européen des brevets

(11) **EP 3 899 438 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **19805223.5**

(22) Anmeldetag: **13.11.2019**

(51) Internationale Patentklassifikation (IPC):
**G01F 1/58** (2006.01) **G01F 23/24** (2006.01)
**G01B 7/30** (2006.01) **G01P 5/08** (2006.01)

(52) Gemeinsame Patentklassifikation (CPC):
**G01F 1/588; G01F 23/242;** G01B 7/30

(86) Internationale Anmeldenummer:
**PCT/EP2019/081210**

(87) Internationale Veröffentlichungsnummer:
**WO 2020/126239 (25.06.2020 Gazette 2020/26)**

(54) **MAGNETISCH-INDUKTIVE DURCHFLUSSMESSSONDE UND MESSAUFBAU ZUR ERMITTLUNG EINES DURCHFLUSSES UND EINES EINBAUWINKELS**

MAGNETICALLY INDUCTIVE FLOW METER AND MEASURING ARRANGEMENT FOR DETERMINING A FLOW RATE AND AN INSTALLATION ANGLE

SONDE DE MESURE DE DÉBIT À INDUCTION MAGNÉTIQUE ET STRUCTURE DE MESURE DE DÉTERMINATION D'UN DÉBIT ET D'UN ANGLE DE MONTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018 DE 102018132600**

(43) Veröffentlichungstag der Anmeldung:
**27.10.2021 Patentblatt 2021/43**

(73) Patentinhaber: **Endress + Hauser Flowtec AG 4153 Reinach (CH)**

(72) Erfinder: **BIER, Thomas 4125 Riehen (CH)**

(74) Vertreter: **Penner, Paul**
**Endress + Hauser Group Services (Deutschland) AG+Co. KG**
**PatServe**
**Colmarer Straße 6**
**79576 Weil am Rhein (DE)**

(56) Entgegenhaltungen:
EP-A1- 0 892 251    CN-U- 205 785 366
DE-A1- 3 037 913    DE-A1- 3 707 138
FR-A- 1 528 050     US-A- 3 119 960
US-A- 3 161 047     US-A- 3 308 659
US-A- 3 885 433     US-A1- 2014 047 927

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass eine Symmetrieachse der Magnetfeldlinien im Wesentlichen senkrecht zur Querachse verlaufen. Ein an die Mantelfläche des Messrohres angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme eines bekannten Rohrquerschnitts, der Volumendurchfluss des Mediums ermittelt werden.

Im Gegensatz zu magnetisch-induktiven Durchflussmessgeräten, bei denen eine Spulenanordnung zur Erzeugung eines ein Messrohr durchdringenden Magnetfelds auf der Mantelflache des Messrohrs fixiert ist und mindestens zwei Messelektroden in der Innenwandung angeordnet sind, werden magnetisch-induktive Durchflussmesssonden mit ihrem üblicherweise kreiszylindrischen Gehäuse in eine seitliche Öffnung des Messrohrs eingesteckt und fluiddicht fixiert. Die erwähnte Spulenanordnung auf der Mantelflache des Messrohrs entfällt, da das Magnetfeld lediglich im Bereich des in das Fluid ragenden Frontendes der Durchflussmesssonde existiert bzw. von einem deren Spulenanordnung durchfliessenden Strom in diesem Bereich erzeugt wird. Die Durchflussmesssonde umfasst üblicherweise zwei stiftförmig ausgebildete Messelektroden. Es sind aus der EP0534003A1 aber auch Durchflussmesssonden mit einer im Zentrum des Frontendes angeordneten, stiftförmigen Messelektrode und einer die stiftförmige Messelektrode umschließende Ringelektrode bekannt.

Die EP0892251A1 offenbart eine magnetisch-induktive Durchflussmesssonde, deren in das Fluid ragende Frontende die Form einer Kugelkalotte annimmt und in der eine erste und zweite galvanische Elektrode auf einem der Meridiane der Kugelkalotte symmetrisch zu einem Scheitelpunkt des Meridians angeordnet sind. Die Durchflussmesssonde ist praktisch senkrecht zu der Strömungsrichtung des zu messenden Fluids einzutauchen und durch Drehung so auszurichten, dass eine die zwei Elektroden verbindende Gerade senkrecht zur Strömungsrichtung verläuft. Eine Abweichung von der idealen Einbauorientierung führt zur Abnahme der Genauigkeit des gemessenen Durchflusses.

Aus der US3881350A ist eine magnetisch-induktive Durchflussmesssonde bekannt, die neben den beiden, auf einem ersten Durchmesser angeordneten Messelektroden zwei weitere, auf einem zweiten Durchmesser angeordnete Messelektroden aufweist, wobei beide Durchmesser senkrecht zueinander stehen. Da eine Messschaltung dazu eingerichtet ist, jeweils eine an den beiden Messelektrodenpaaren anliegende Messspannung zu erfassen, ergeben sich daraus für die Durchflussmesssonde zwei ideale Einbauorientierungen in der Rohrleitung.

Diesen Ausgestaltungen nachteilig ist, dass beim Einbauen der magnetisch-induktiven Durchflussmesssonde in eine Messstelle, eine klar definierte Einbauanforderung eingehalten werden muss. Dem Nutzer wird abverlangt, die Durchflussmesssonde so einzubauen, dass der die zwei Messelektroden schneidende Durchmesser praktisch senkrecht zu der Strömungsrichtung des zu messenden Fluids verläuft. Wird dies bei der Installation nicht berücksichtigt, kommt es zu erheblichen Messfehlern bei der Ermittlung des Durchflusses und/oder der Durchflussgeschwindigkeit.

Aus der DE3707138A1 ist ein elektromagnetischer Sensor bekannt. Der Sensor besteht aus einem Gehäuse und mehreren Elektrodenpaaren, die mehreren Magnetspulen zugeordnet sind, die in verschiedenen, orthogonalen Richtungen angeordnet sind. Es sind drei Elektrodenpaare mit sechs Elektroden offenbart. Der Sensor ermöglicht die Bestimmung der Strömungsrate und der Strömungsrichtung.

US3308659A betrifft einen Geschwindigkeitsmesswandler, bei dem vier oder mehr Elektroden um ein Ende eines Kerns herum positioniert sind, wodurch sowohl die Geschwindigkeit als auch die Richtung gemessen werden können.

Der Erfindung liegt die Aufgabe zugrunde eine magnetisch-induktive Durchflussmesssonde, einen Messaufbau und ein Verfahren zur Ermittlung einer Durchflussgeschwindigkeit bereitzustellen, die allesamt dazu beitragen das Einbauen der Durchflussmesssonde in die Rohrleitung zu vereinfachen.

Die Aufgabe wird gelöst durch die erfindungsgemäße magnetisch-induktive Durchflussmesssonde nach Anspruch 1 und durch die Messstelle nach Anspruch 9.

Eine erfindungsgemäße magnetisch-induktive Durchflussmesssonde umfasst ein Fronteil mit einem ein Zentrum aufweisenden Frontende, ein Gehäuse, eine im Gehäuse angeordnete magnetfelderzeugende Vorrichtung zur Erzeugung eines durch das Frontende hindurchreichenden Magnetfeldes und eine Mess- und Auswerteeinheit, und ist dadurch gekennzeichnet, dass auf dem Frontende drei einen galvanischen Kontakt mit dem Medium bildende Messelektroden angeordnet sind, die genau drei Messelektrodenpaare bilden, und dass die Mess- und/oder Auswerteeinheit dazu eingerichtet ist an drei Messelektrodenpaaren jeweils eine induzierte Messspannung zu erfassen, einen Einbauwinkel $\alpha$ in Abhängigkeit von zwei der drei erfassten Messspannungen zu bestimmen und den Durchfluss und/oder die

Durchflussgeschwindigkeit des Mediums in Abhängigkeit der an einem Messelektrodenpaar anliegenden Messspannung und des Einbauwinkels $\alpha$ zu ermitteln, wobei der Einbauwinkel $\alpha$ durch eine ein Messelektrodenpaar schneidende Gerade und einer zu einer idealen Einbauorientierung gehörenden Idealgeraden senkrecht zur Strömungsrichtung des durch die Rohrleitung fließenden Mediums aufgespannt ist.

Der größte Vorteil der erfindungsgemäßen Durchflussmesssonde liegt darin, dass durch die drei einen galvanischen Kontakt mit dem Medium bildenden Messelektroden mindestens zwei Messspannungen im fließenden Medium abgegriffen werden können. Diese Messspannungen sind nicht nur proportional zur Fließgeschwindigkeit des Mediums, sondern hängen offenkundig von der Einbauorientierung der Durchflusssonde ab. Mit nur einem Messelektrodenpaar, insbesondere mit einer einzelnen abgreifbaren Messspannung, ist es unmöglich nähere Informationen zur Einbauorientierung zu erhalten. Durch mindestens eine weitere Messspannung lässt sich die Einbauorientierung relativ zu einer idealen Einbauorientierung gehörenden Idealgeraden senkrecht zur Strömungsrichtung des Mediums bzw. zur Längsrichtung der Rohrleitung ermitteln. Mittels der Mess- und/oder Auswerteeinheit lässt sich ein Einbauwinkel $\alpha$, der ein Maß für die Abweichung zur idealen Einbauorientierung ist, ermitteln. Der Einbauwinkel $\alpha$ wird durch eine, ein Messelektrodenpaar schneidende Gerade und eine zu einer idealen Einbauorientierung gehörenden Idealgeraden senkrecht zur Strömungsrichtung des durch die Rohrleitung fließenden Mediums aufgespannt. Durch Drehen der Durchflussmesssonde um das Zentrum des Frontendes wird der Einbauwinkel $\alpha$ eingestellt. Ist dieser bekannt, kann er zur Korrektur der abgegriffenen Messspannung genutzt werden. Dafür reichen drei Messelektroden und der Abgriff von zwei Messspannungen mittels der Mess- und/oder Auswerteeinheit aus. Die Ermittlung des Einbauwinkels $\alpha$ geschieht nach dem Einbauen bzw. beim Einrichten der Durchflussmesssonde einmalig, kontinuierlich oder zu festgelegten Zeitpunkten.

Der Benutzer braucht beim Anbringen und Fixieren der Durchflussmesssonde in die Rohrleitung neben dem sachgemäßen Einführen der Durchflussmesssonde in die Rohrleitung und dem ausreichenden Abdichten, nicht mehr noch zusätzlich auf die Orientierung der Durchflussmesssonde zur Strömungsrichtung zu achten.

Die Berücksichtigung einer dritten Messspannung eröffnet weitere Möglichkeiten. Zum Einen kann mittels der dritten und ersten und/oder der dritten und zweiten Messspannung jeweils der Einbauwinkel $\alpha$ ermittelt werden. Somit kann durch eine statistische Auswertung, beispielsweise Erstellen eines Mittelwertes etc., die Schwankungen oder der Fehler des ermittelten Einbauwinkels $\alpha$ verringert werden. Des Weiteren dient die zusätzliche Messspannung als Kontrollwert für Einbaukonstellationen, in denen an einem Messelektrodenpaar trotz fließendem Medium keine Spannung anliegt. Das tritt zum Beispiel immer dann auf, wenn eine das Messelektrodenpaar schneidende Gerade parallel zur Strömungsrichtung verläuft. Durch die Berücksichtigung aller anliegenden Messspannung kann zwischen einem einbaubedingten und defektbedingten Ausfall eines Messelektrodenpaares unterschieden werden. Dafür muss die Mess- und/oder Auswerteeinheit eingerichtet sein, an jedem durch die drei Messelektroden gebildete Messelektrodenpaare eine Messspannung abzugreifen. Die Ermittlung des Einbauwinkels $\alpha$ geschieht nach dem Einbauen bzw. beim Einrichten der Durchflussmesssonde einmalig, kontinuierlich oder zu festgelegten Zeitpunkten. Alternativ sind die Messelektroden mit einer Multiplexereinheit, einer analogen oder digitalen Selektionsschaltung, verbunden, die dazu eingerichtet ist die anliegenden Messspannungen zyklisch abzugreifen.

Gemäß einer Ausgestaltung sind die Messelektroden drehsymmetrisch um ein Drehzentrum angeordnet, wobei das Zentrum des Frontendes das Drehzentrum bildet.

Eine drehsymmetrische Anordnung der Messelektroden erleichtert die Auswertung der Messspannungen, da bei einer im Wesentlichen homogenen Magnetfeldverteilung am Frontende auf eine individuelle Berücksichtigung der Anordnungsgeometrie bei der Ermittlung des Einbauwinkels $\alpha$ oder des Durchflusses verzichtet werden kann.

Gemäß einer Ausgestaltung ist das Gehäuse zylindrisch, insbesondere kreiszylindrisch mit einer durch das Zentrum des Frontendes verlaufenden Rotationsachse ausgebildet, wobei die Rotationsachse senkrecht zum Frontende verläuft.

Gemäß einer Ausgestaltung umfasst die magnetfelderzeugende Vorrichtung eine Spulenanordnung und einen Spulenkern, wobei die magnetfelderzeugende Vorrichtung mindestens eine Rückführung umfasst, wobei der Spulenkern an oder in der Nähe des Frontendes endet, wobei der Spulenkern zylindrisch, insbesondere kreiszylindrisch ausgebildet ist, wobei die Spulenanordnung den Spulenkern umschließt.

Da die Messspannung gemäß Faraday'schem Induktionsgesetz von der Magnetfeldrichtung abhängt, ist es vorteilhaft, wenn eine Symmetrieachse des Magnetfeldes senkrecht zum Frontende aus dem Gehäuse aus- oder eintritt. Die Messspannung hängt insbesondere von der Magnetfeldstärke ab, somit ist es besonders vorteilhaft, wenn die Magnetfeldstärke über das gesamte Frontende, inbesondere zwischen den jeweiligen Messelektrodenpaaren konstant ist. Somit kann auf eine Kalibration oder auf eine magnetfeldbedingte Korrektur der einzelnen ermittelten Messspannungen verzichtet werden.

Gemäß einer Ausgestaltung ist die Rückführung hohlzylindrisch ausgebildet, wobei die Rückführung den Spulenkern und die Spulenanordnung zumindest teilweise umschließt.

Die Rückführung ist in dem Fall hohlzylindrisch und an einem Ende geschlossen ausgebildet, so dass sie die Form einer Tasse annimmt. Im Zentrum der hohlzylindrischen Wandung ist der Spulenkern angeordnet. Dieser ist zylindrisch oder quaderförmig ausgebildet. In diesem Fall wird der Spulenkern von einer einzelnen Rückführung umschlossen.

Gemäß einer Ausgestaltung ist zwischen den Messelektrodenpaaren jeweils eine Rückführung angeordnet, wobei die Rückführungen jeweils eine Längsachse aufweisen, wobei die Längsachsen jeweils zwischen einem Messelektrodenpaar senkrecht aus dem Frontende austritt.

In einer vorteilhaften Ausgestaltung weist die Durchflussmesssonde mehrere Rückführungen auf. Die Rückführungen sind so ausgebildet und angeordnet, dass die Symmetrieachse des Magnetfeldes zwischen den Messelektroden senkrecht in das Frontende hineinreicht oder aus dem Frontende herausragt. Es ist vorteilhaft, wenn die Rückführungen stiftförmig ausgebildet und jeweils zwischen einem Messelektrodenpaar angeordnet sind.

Gemäß einer weiteren Ausgestaltung sind die Rückführungen als Kreisringsegmente ausgebildet.

Gemäß einer Ausgestaltung ist die Mess- und Auswerteeinheit dazu ausgebildet, anhand der höchsten Messspannung in Bezug auf die an den jeweiligen Messelektroden anliegenden Messspannungen einen Durchfluss und/oder eine Durchflussgeschwindigkeit zu ermitteln und einer Messelektrode, die nicht für die Ermittlung des Durchflusses und/oder der Durchflussgeschwindigkeit verwendet wird, die Funktion einer Bezugselektrode oder einer Füllstandsüberwachungselektrode oder einer Elektrode zur Bestimmung der Leitfähigkeit des Mediums zuzuordnen.

Nach dem Ermitteln des Einbauwinkels $\alpha$, reicht eine Messpannung bzw. ein Messelektrodenpaar aus, um den Durchfluss und/oder die Durchflussgeschwindigkeit zu überwachen. Somit steht eine der drei Messelektroden für die Überwachung weiterer prozessbedingter Parameter zur Verfügung. Diese Messelektrode wird in dem Zusammenhang als funktionelle Messelektrode bezeichnet. Idealerweise ist die Mess- und/oder Auswerteeinheit dazu eingerichtet, den Durchfluss und/oder die Durchflussgeschwindigkeit anhand dem Messelektrodenpaar mit der höchsten gemessenen Messspannung zu ermitteln. Dadurch erhält man eine bessere Auflösung und einen geringeren Messfehler bzw. geringere Messschwankungen. Der funktionellen Messelektrode wird über die Mess- und/oder Auswerteeinheit eine neue Funktion zugeordnet.

Eine Funktion ist die Bestimmung der Leitfähigkeit des Mediums. Für die Ermittlung der Leitfähigkeit des Mediums wird zwischen der funktionellen Messelektrode und beispielsweise dem Gehäuse, der Rohrleitung oder einem Erdungsring eine Potentialdifferenz angelegt und der Strom ermittelt. Alternativ kann ein Signal, insbesondere ein Spannungssignal angelegt werden und aus der Dämpfung des Signales eine Impedanz des Mediums ermittelt werden. Daraus können mit geeignetem Modell Informationen bzgl. der Leitfähigkeit des Mediums gewonnen werden.

Eine weitere Funktion ist die Überwachung des Füllstandes. Füllstandsüberwachungssysteme für Durchflussmessgeräte sind bereits für magnetisch-induktive Durchflussmessgeräte bekannt. Dabei wird eine sogenannte Füllstandsüberwachungselektrode bei horizontalem Einbau des Messrohres, bezüglich des Querschnittes des Messrohres optimalerweise am obersten Punkt des Messrohres angeordnet. Durch Bestimmung der Leitfähigkeit des Mediums zwischen der Füllstandsüberwachungselektrode und der Bezugselektrode oder eines metallischen Prozessanschlusses wird die Befüllung des Rohres überwacht. Dabei weist das Medium gegenüber Luft stets eine höhere Leitfähigkeit auf. Sinkt die Leitfähigkeit unter einen vorgegebenen Grenzwert, so wird eine teilweise Befüllung detektiert. Der Grenzwert ist unter anderem abhängig von der spezifischen Leitfähigkeit des Mediums, von der Nennweite des Messrohres, von der Abmessung und Position der Füllstandsüberwachungselektrode sowie von den Eigenschaften der Messrohrauskleidung. Für die Überwachung des Füllstandes mittels der funktionellen Messelektrode wird die Leitfähigkeit des Mediums zwischen der funktionellen Messelektrode und einem Referenzpotential ermittelt.

Des Weiteren kann sie die Funktion einer Bezugselektrode zugeordnet bekommen. Üblicherweise ist das Gehäuse der Durchflussmesssonde metallisch und wird daher mit einem Refrenzpotential verbunden. Im vorliegenden Fall kann durch die Verwendung der funktionellen Messelektrode als Referenzelektrode auf ein leitfähiges Gehäuse verzichtet werden.

Die Zuordnung der Funktion wird mit einer Schaltungseinheit realisiert, die in der Mess- und/oder Auswerteeinheit oder im Gehäuse des Durchflussmessgerätes eingebaut ist.

Gemäß einem nicht unter den Schutzumfang des Anspruchs fallenden Beispiel ist im Zentrum des Frontendes eine vierte Messelektrode angeordnet, die mit den drei drehsymmetrisch angeordneten Messelektroden ein viertes, fünftes und sechstes Messelektrodenpaar bildet.

Durch das nicht unter den Schutzumfang des Anspruchs fallende Beispiel der Messelektrode im Zentrum ist es vorteilhaft, wenn der Spulenkern eine Durchführung in Form einer Bohrung aufweist, durch die die Messelektrode und die Anschlüsse geführt werden können.

Gemäß einem nicht unter den Schutzumfang des Anspruchs fallenden Beispiel ist die vierte Messelektrode dazu eingerichtet, die Funktion einer Bezugselektrode zu übernehmen oder die Mess- und Auswerteeinheit ist dazu eingerichtet, die jeweils zwischen dem vierten, fünften und/oder sechsten Messelektrodenpaar anliegende Messspannung zu ermitteln.

Üblicherweise wird ein metallisches Gehäuse verwendet. Dieses wird an ein Referenpotential angeschlossen und dient somit als Referenz- bzw. Bezugselektrode. Durch das Anordnen einer Elektrode, die als Bezugselektrode eingerichtet ist, kann auf ein leitfähiges Gehäuse verzichtet werden. Das Gehäuse kann somit aus einem kostengünstigen Kunststoff gefertigt werden.

Ist die vierte Messelektrode als Bezugselektrode eingerichtet, übernimmt die funktionelle Messelektrode die Funktion der Füllstandsüberwachungselektrode.

Durch das Abgreifen der Messspannung zwischen dem vierten, fünften und/oder sechsten Messelektrodenpaar ergeben sich zusätzliche ideale Einbauorientierungen. Eine ideale Einbauorientierung wird immer dann erreicht, wenn eine ein beliebiges Messelektrodenpaar schneidende Gerade senkrecht zur Strömungsrichtung verläuft. Durch eine vierte Messelektrode verdoppelt sich die Anzahl der idealen Einbauorientierungen von 6 auf 12. Der Drehwinkel zwischen den einzelnen Einbauorientierungen beträgt nur noch 30°, somit steigt die Wahrscheinlichkeit den Einbauwinkel $\alpha$ möglichst gering zu halten.

Ein nicht unter den Schutzumfang des Anspruchs fallendes Verfahren zur Ermittlung eines Durchflusses und/oder einer Durchflussgeschwindigkeit eines Mediums in einer Rohrleitung mittels einer magnetisch-induktiven Durchflussmesssonde und eines Einbauwinkels $\alpha$ der magnetisch-induktiven Durchflussmesssonde, wobei der Einbauwinkel $\alpha$ durch eine ein Messelektrodenpaar schneidende Gerade und einer zu einer idealen Einbauorientierung gehörenden Idealgeraden senkrecht zur Strömungsrichtung des durch die Rohrleitung fließenden Mediums aufgespannt wird, kennzeichnet sich durch folgende Verfahrensschritte aus:

A) Messen einer ersten und zweiten Messspannung, wobei die erste Messspannung an einem ersten Messelektrodenpaar und die zweite Messspannung an einem zweiten Messelektrodenpaar anliegt;
V1) Ermittlung des Einbauwinkels $\alpha$ in Abhängigkeit der ersten und zweiten Messspannung; und
W1) Ermittlung des Durchflusses und/oder der Durchflussgeschwindigkeit in Abhängigkeit von der an einem Messelektrodenpaar anliegenden Messspannung und des ermittelten Einbauwinkels $\alpha$.

Es ist besonders von Vorteil, wenn der Einbauwinkel $\alpha$ beim Einrichten der Durchflussmesssonde ermittelt wird und dann im weiteren Verfahren für die Ermittlung des Durchflusses und/oder der Durchflussgeschwindigkeit berücksichtigt wird. Für die Bestimmung des Einbauwinkels $\alpha$ wird mindestens ein Paar an Messspannungen benötigt. Durch Vektorberechnung lassen sich in Abhängigkeit der Einbaugeometrie der Messelektroden und Einbauorientierung die Messspannungen beschreiben.

Die an einem Messelektrodenpaar anliegende Messspannung hängt wie folgt von dem Einbauwinkel $\alpha$ ab:

$$U_1 = k_1 \cdot U_i \cdot \cos(\alpha),$$

wobei $U_1$ die anliegende Messspannung, $U_i$ die Messspannung bei idealer Einbauorientierung und $k_1$ einen ersten Korrekturfaktor beschreibt. Ist eine weitere Messelektrode so angeordnet, dass die drei Messelektroden die Ecken eines gleichwinkligen Dreiecks bilden, gilt, ausgehend von der obigen Messspannung, für die weiteren anliegenden Messspannungen

$$U_2 = k_2 \cdot U_i \cdot \cos(\alpha - 60°)$$

und

$$U_3 = k_3 \cdot U_i \cdot \cos(\alpha - 120°).$$

Sind die Korrekturfaktoren $k_1, k_2$ und/oder $k_3$ bekannt, kann durch Umstellen der Gleichungen der Einbauwinkel $\alpha$ hergeleitet werden. Ist dieser bekannt, kann der Durchfluss und/oder die Durchflussgeschwindigkeit in Abhängigkeit des Einbauwinkels $\alpha$ ermittelt werden.

Ist eine weitere Messelektrode im Zentrum angebracht, stehen drei weitere Messspannungen zur Verfügung. Die jeweils an den Messelektrodenpaaren anliegenden Messspannungen lassen sich mittels Grundlagen der Trigonometrie formulieren. Zu jeder Messspannung lässt sich eine Gleichung aufstellen, die jeweils die gemessene Messspannung in Relation zu dem Einbauwinkel und der bei einer idealen Einbauorientierung zu erwartenden Messspannung setzt. Dabei muss zusätzlich die Anordnung der Messelektroden auf dem Frontende berücksichtigt werden.

Gemäß einem Beispiel umfasst das nicht unter den Schutzumfang des Anspruchs fallende Verfahren folgende Verfahrenschritte:

B) Messen einer dritten Messspannung, wobei die dritte Messspannung an einem dritten Messelektrodenpaar anliegt; und
V2) Ermittlung des Einbauwinkels $\alpha$ in Abhängigkeit der ersten, zweiten und dritten Messspannung.

Die Berücksichtigung einer dritten Messspannung eröffnet weitere Möglichkeiten. Zum Einen kann mittels der dritten und ersten und/oder der dritten und zweiten Messspannung jeweils der Einbauwinkel $\alpha$ ermittelt werden. Somit kann durch eine statistische Auswertung, beispielsweise Erstellen eines Mittelwertes der erfassten Messspannungen etc., die Schwankungen oder der Fehler des ermittelten Einbauwinkels $\alpha$ verringert werden. Des Weiteren dient die zusätzliche Messspannung als Kontrollwert für Einbaukonstellationen, in denen an einem Messelektrodenpaar keine Spannung anliegt. Das tritt zum Beispiel immer dann auf, wenn eine ein Messelektrodenpaar schneidende Gerade parallel zur Strömungsrichtung verläuft. Somit kann zwischen einem einbaubedingten und defektbedingten Ausfall eines Messelektrodenpaares unterschieden werden. Dafür muss die Mess- und/oder Auswerteeinheit eingerichtet sein, an jedem durch die drei Messelektroden gebildete Messelektrodenpaare eine Messspannung abzugreifen. Die Ermittlung des Einbauwinkels $\alpha$ geschieht nach dem Einbauen bzw. beim Einrichten der Durchflussmesssonde einmalig, kontinuierlich oder zu festgelegten Zeitpunkten.

Gemäß einem Beispiel umfasst das nicht unter den Schutzumfang des Anspruchs fallende Verfahren folgenden Verfahrensschritt:

Z) Ausgabe des Einbauwinkels $\alpha$ und/oder des Durchflusses und/oder der Durchflussgeschwindigkeit mittels einer Ausgabeeinheit.

Gemäß einem Beispiel umfasst das nicht unter den Schutzumfang des Anspruchs fallende Verfahren folgende Verfahrensschritte:

K) Messen der an den jeweiligen Messelektrodenpaaren anliegenden Messspannung;
L) Summieren der gemessenen Messspannungen;
M) Ausgabe der ermittelten Summe der gemessenen Messspannungen; und/oder
N) Erstellen einer Fehlermeldung, wenn die Summe der gemessenen Messspannungen von einem vordefinierten Sollwert abweicht.

Oftmals kann es zu Unregelmäßgikeiten oder zu defektbedingten Abweichungen bei der Bestimmung des Durchflusses und/oder der Durchflussgeschwindigkeit kommen. Dann ist es besonders hilfreich, wenn man mit Hilfe einer Plausibilitätsprüfung einen Defekt erkennen bzw. ausschließen kann. Sind die Messelektroden drehsymmetrisch angeordnet und ist das Magnetfeld homogen über das Frontende verteilt, ist die Summe der anliegenden Messspannungen durch einen Sollwert gegeben. Im Idealfall ist der Sollwert für die vorliegende Messelektrodenanordung gleich Null. Er kann zuvor im Kalibrationsverfahren bestimmt oder fest vorgegeben werden.

Gemäß einem Beispiel umfasst das nicht unter den Schutzumfang des Anspruchs fallende Verfahren folgende Verfahrensschritte:

W2) Ermitteln des Durchflusses und/oder der Durchflussgeschwindigkeit anhand des Messelektrodenpaares an dem die höchste Messspannung in Bezug auf die ermittelten Messspannungen anliegt;
Q) Einrichten einer Messelektrode, die nicht für die Ermittlung des Durchflusses und/oder der Durchflussgeschwindigkeit verwendet wird, zur Überwachung des Füllstandes; und/oder
R) Einrichten einer Messelektrode, die nicht für die Ermittlung des Durchflusses und/oder der Durchflussgeschwindigkeit verwendet wird, zur Ermittlung der Leitfähigkeit des Mediums, und/oder
S) Einrichten einer Messelektrode, die nicht für die Ermittlung des Durchflusses und/oder der Durchflussgeschwindigkeit verwendet wird, als Bezugselektrode.

Nach der Ermittlung des Einbauwinkels $\alpha$ reicht es aus, den Durchfluss und/oder die Durchflussgeschwindigkeit mit einem einzelnen Messelektrodenpaar zu bestimmen. Es ist vorteilhaft, wenn das Messelektrodenpaar für die Ermittlung des Durchflusses und/oder der Durchflussgeschwindigkeit verwendet wird, an dem die höchste Messspannung im Bezug auf die drei anliegenden und ermittelten Messspannungen anliegt. Einer der drei Messelektroden, im Folgenden als funktionelle Messelektrode bezeichnet wird, kann somit eine neue Funktion zugeordnet bekommen. Abhängig von der Anwendung kann eine Schaltungseinheit dazu eingerichtet sein, der funktionellen Messelektrode die Funktion einer Füllstandsüberwachungselektrode zuzuordnen.

Eine erfindungsgemäße Messstelle zur Ermittlung eines Durchflusses und/oder einer Durchflussgeschwindigkeit eines Mediums umfasst eine Rohrleitung, welche das Medium in eine durch eine Rohrachse definierte Längsrichtung führt und eine Öffnung in einer Wandung der Rohrleitung, und ist dadurch gekennzeichnet, dass eine erfindungsgemäße magnetisch-induktive Durchflussmesssonde durch die Öffnung in die Rohrleitung eingebracht ist, wobei die Mess- und/oder Auswerteeinheit dazu eingerichtet ist, den Durchfluss und/oder die Durchflussgeschwindigkeit und den Einbauwinkel zu ermitteln.

Durch das kontinuierliche oder zu festgelegten Zeitpunkten Ermitteln des Einbauwinkels $\alpha$ kann die Durchflussmesssonde zum Überwachen der Messstelle verwendet werden.

Änderungen des ermittelten Einbauwinkels sind ein Indiz für eine Lockerung der Verschraubung oder eine Änderung des Strömungsverhaltens, die immer dann auftritt wenn es zu Ablagerungen oder Verstopfungen in der Rohrleitung kommt.

Die Erfindung wird anhand der nachfolgenden Figuren näher erläutert. Es zeigt:

Fig. 1: eine Perspektivansicht einer magnetisch-induktiven Durchflussmesssonde gemäß dem Stand der Technik;

Fig. 2: eine Querschnitt einer ersten Ausgestaltung der erfindungsgemäßen magnetisch-induktiven Durchflussmesssonde;

Fig. 3: ein Längsschnitt einer ersten Ausgestaltung der erfindungsgemäßen magnetisch-induktiven Durchflussmesssonde in einer Messstelle;

Fig. 4: eine Frontansicht der erfindungsgemäßen magnetisch-induktiven Durchflussmesssonde mit eingezeichneter Einbaulage;

Fig. 5: eine Frontansicht eines nicht unter den Schutzumfang des Anspruchs fallenden Beispiels der magnetisch-induktiven Durchflussmesssonde mit einer vierten Messelektrode im Zentrum des Frontendes; und

Fig. 6: zwei Ausführungen der Rückführungen der magnetfelderzeugenden Vorrichtung.

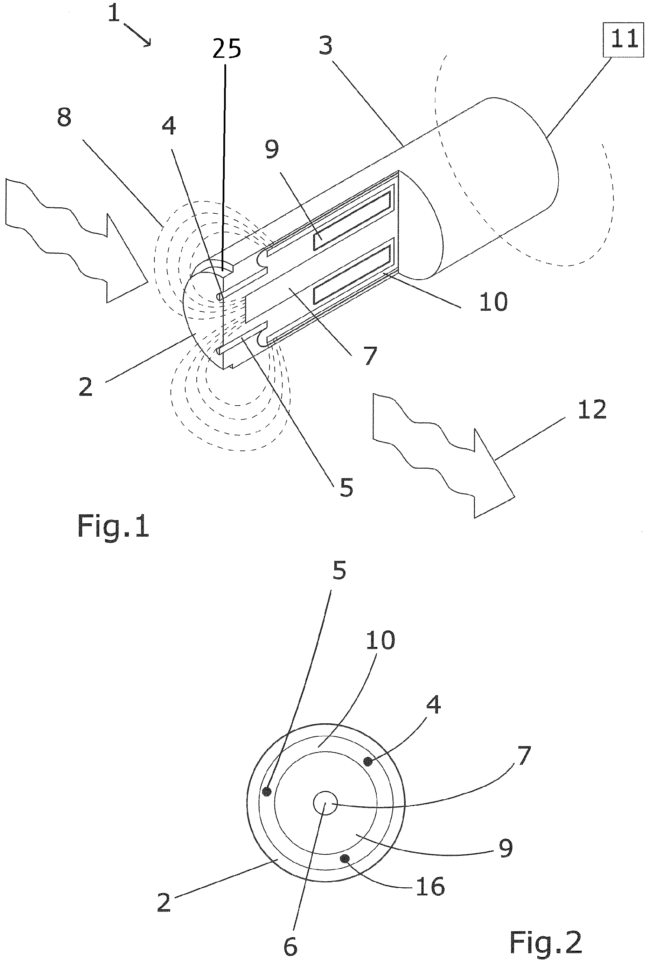

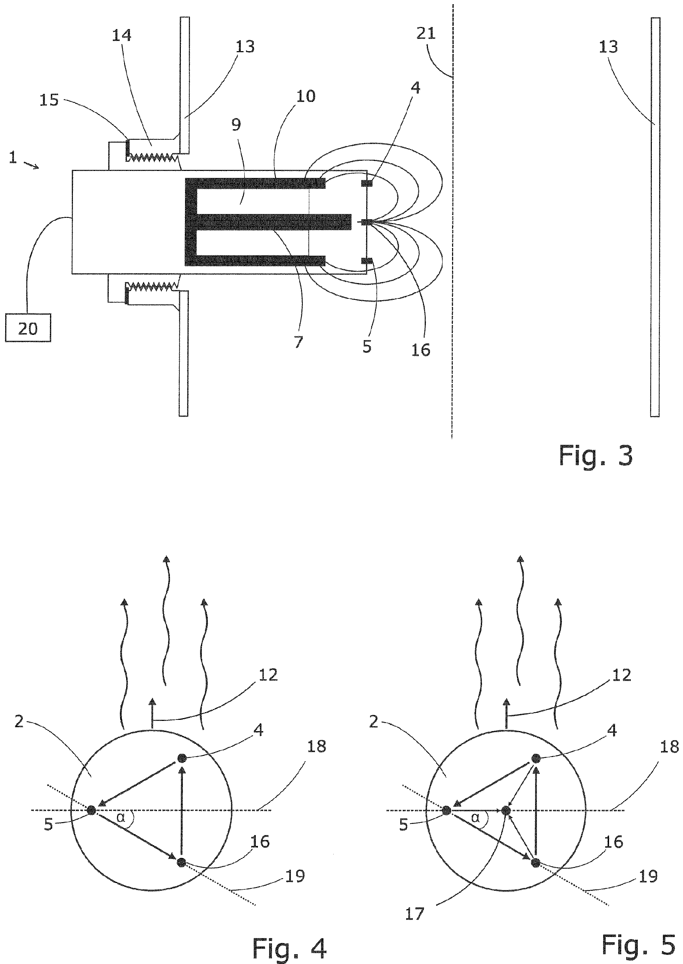

Anhand der perspektivischen und teilweise geschnittenen Darstellung der Fig. 1 wird zunächst das der Erfindung zugrunde liegende Messprinzip erläutert. Eine Durchflussmesssonde (1) umfasst ein im allgemeinen kreiszylindrisches, einen vorgegebenen Außendurchmesser aufweisendes Gehäuse (3). Dieses ist an den Durchmesser einer Bohrung angepasst, die sich in einer Wand einer in Fig. 1 nicht, dagegen in Fig. 3 dargestellten Rohrleitung (13) befindet und in die die Durchflussmesssonde (1) fluiddicht eingesteckt ist. In der Rohrleitung (13) strömt ein zu messendes Fluid, in das die Durchflussmesssonde (1) praktisch senkrecht zur Strömungsrichtung des Fluids eintaucht, die durch die gewellten Pfeile (12) angedeutet ist. Ein in das Fluid ragendes Frontende (2) des Gehäuses (3) ist mit einem Frontteil aus Isoliermaterial fluiddicht verschlossen. Mittels einer im Gehäuse (2) angeordneten Spulenanordnung (9) lässt sich ein durch das Frontende hindurch, in das Fluid hineinreichendes Magnetfeld (8) erzeugen. Ein mindestens teilweise aus einem weichmagnetischen Material bestehender, im Gehäuse (2) angeordneter Spulenkern (7) endet an oder in der Nähe des Frontendes. Eine Rückführung (10), die die Spulenanordnung (9) und den Spulenkern (7) umschließt, ist dazu eingerichtet das aus dem Frontende hindurchreichenden Magnetfeld (8) in das Gehäuse (2) zurückzuführen. Eine erste und eine zweite galvanische Messelektrode (4, 5) sind in dem Frontteil angeordnet und berühren das Fluid. An den Messelektroden (4, 5) lässt sich eine aufgrund des Faraday'schen Induktionsgesetzes induzierte elektrische Spannung mittels einer Mess- und/oder Auswerteeinheit (11) abgreifen. Diese ist maximal, wenn die Durchflussmesssonde so in die Rohrleitung (13) eingebaut ist, dass eine durch eine die beiden Messelektroden schneidende Gerade und eine Längsachse der Durchflussmesssonde aufgespannte Ebene senkrecht zu der Strömungsrichtung (12) bzw. Längsachse der Rohrleitung (21) verläuft.

Der in Fig. 2 abgebildete Querschnitt zeigt den im Zentrum (6) angeordneten Spulenkern (7), die Spulenanordnung (9), die Rückführung (10), welch in dieser Ausgestaltung hohlzylindrisch ausgebildet ist, und die erste, zweite und dritte Messelektrode (4, 5, 16), die drehsymmetrisch zum Drehzentrum, hier das Zentrum des Frontendes (6), angeordnet sind. Die Anordnung und Ausgestaltung der Rückführung (10) ist dahingehend optimiert, dass die Symmetrieachse der Magnetfeldlinien (8) das Frontende (2) zwischen Messelektrodenpaaren senkrecht schneidet und die Magnetfeldstärke maximal ist. Der Einbauwinkel $\alpha$ und der Druchfluss wird mittels einer Ausgabeeinheit (20) ausgegeben.

In der Fig. 3 ist die Durchflussmesssonde (1) im Längsschnitt dargestellt. Die Durchflussmesssonde (1) ist mittels einer Einschraubverbindung (14), die in die Wand der Rohrleitung (13) eingesetzt und mit ihr z.B. verschweißt ist, in der Rohrleitung (13) fluiddicht befestigt. Dieser Aufbau der Messstelle ist besonders zweckmäßig, da zunächst die Einschraubverbindung (14) in die Rohrleitung (13) eingesetzt und darin befestigt werden kann und erst danach die Durchflussmesssonde (1) in den Einschraubverbindung (14) eingesteckt bzw. eingeschraubt, ihrerseits darin fixiert und mittels einer Dichtung (15) abgedichtet zu werden braucht. Die erste, zweite und dritte Messelektrode (4, 5, 16) sind auf dem Frontende (2) symmetrisch zu einem Zentrum (6) des Frontendes angeordnet.

Im Ausführungsbeispiel der Fig. 4 deuten Pfeile die Messelektrodenpaare an, an denen jeweils eine Messspannung mittels der Mess- und/oder Auswerteeinheit abgegriffen wird. Eine gestrichelte Gerade deutet eine Idealgerade (18) an. Diese spannt zusammen mit einer Referenzgeraden (19), hier als gepunktete Linie dargestellt, den Einbauwinkel $\alpha$ auf. Die Idealgerade (18) verläuft senkrecht zur Strömungsrichtung (12). Die Referenzgerade (19) kann durch ein beliebiges Messelektrodenpaar beschrieben werden. In diesem Fall verläuft die Referenzgerade (19) durch die zweite und dritte Messelektrode (5, 16).

Im nicht unter den Schutzumfang des Anspruchs fallenden Beispiel der Fig. 5 ist eine vierte Messelektrode (17) im Zentrum (6) des Frontendes angeordnet. Pfeile deuten die Messelektrodenpaare an, an denen jeweils eine Messspannung mittels der Mess- und/oder Auswerteeinheit abgegriffen wird. Zusätzlich zu dem in Fig. 4 abgebildeten Ausführungsbeispiel gibt es drei weitere Messelektrodenpaare, an denen jeweils eine Messspannung bei fließendem Medium anliegt.

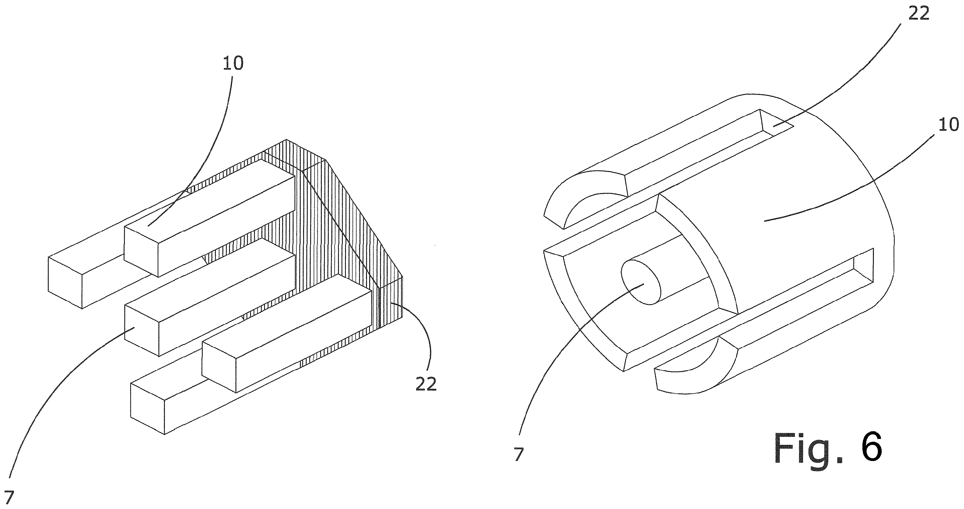

Die Fig. 6 zeigt schematisch zwei Ausführungsformen der magnetfelderzeugenden Vorrichtung. Anhand der erste Ausführungsform wird das Grundprinzip dargestellt. Ein Grundkörper (22) dient als ein Verbindungsteil des Spulenkerns (7) mit den Rückführungen (10). Der Grundkörper hat ein Polygon als Basis, er kann aber auch kreiszylindrisch ausgebildet sein. Die Rückführungen sind in der Fig. 6 quaderförmig dargestellt, sie können jedoch beliebig geformt, insbesondere an die Messelektrodenanordnung angepasst sein. In der zweiten Ausführungsform ist der Spulenkern (7) kreiszylindrisch und die Rückführungen (10) als Kreisringsegmente geformt. Des Weiteren sind die Grundfläche (22) und die Rückführungen (10) einstückig ausgebildet. Die Anzahl der Rückführungen (10) hängt von der Anordnung der Messelektroden (4, 5, 16, 17) ab.

### Bezugszeichenliste

1    Durchflussmesssonde
2    Frontende
3    Gehäuse
4    erste Messelektrode
5    zweite Messelektrode
6    Zentrum
7    Spulenkern
8    Magnetfeldlinien
9    Spulenanordnung
10   Rückführung
11   Mess- und/oder Auswerteeinheit
12   Strömungsrichtung
13   Rohrleitung
14   Einschraubverbindung
15   Dichtung
16   dritte Messelektrode
17   vierte Messelektrode
18   Idealgerade
19   Referenzgerade
20   Ausgabeeinheit
21   Längsachse der Rohrleitung
22   Grundkörper
25   Frontteil

### Patentansprüche

**1.** Magnetisch-induktive Durchflussmesssonde zur Ermittlung des Durchflusses und/oder der Durchflussgeschwindigkeit eines Mediums in einer Rohrleitung, umfassend:

     - ein Frontteil (25) mit einem ein Zentrum (6) aufweisenden Frontende (2);
     - ein Gehäuse (3);
     - eine im Gehäuse (3) angeordnete magnetfelderzeugende Vorrichtung zur Erzeugung eines durch das Frontende (2) hindurchreichenden Magnetfeldes; und
     - eine Mess- und Auswerteeinheit (11);

     **dadurch gekennzeichnet,**

     **dass** auf dem Frontende (2) drei jeweils einen galvanischen Kontakt mit dem Medium bildende Messelektroden (4, 5, 16) angeordnet sind, die genau drei Messelektrodenpaare bilden, und **dass** die Mess- und Auswerteeinheit (11) dazu eingerichtet ist an den drei Messelektrodenpaaren, jeweils eine induzierte Messspannung zu erfassen, einen Einbauwinkel $\alpha$ in Abhängigkeit von zwei der drei erfassten Messspannungen zu bestimmen und den Durchfluss und/oder die Durchflussgeschwindigkeit des Mediums in Abhängigkeit der an einem Messelektrodenpaar anliegenden Messspannung und des Einbauwinkels $\alpha$ zu ermitteln, wobei der Einbauwinkel $\alpha$ durch eine ein Messelektrodenpaar schneidende Gerade (19) und einer Idealgeraden (18) senkrecht zur Strömungsrichtung des durch die Rohrleitung fließenden Mediums aufgespannt ist.

**2.** Magnetisch-induktive Durchflussmesssonde nach Anspruch 1, wobei die Messelektroden (4, 5, 16) drehsymmetrisch um ein Drehzentrum angeordnet sind, wobei das Zentrum (6) des Frontendes (2) das Drehzentrum bildet.

**3.** Magnetisch-induktive Durchflussmesssonde nach einem der vorhergehenden Ansprüche,

     wobei das Gehäuse (3) zylindrisch, insbesondere kreiszylindrisch mit einer durch das Zentrum (6) des Frontendes (2) verlaufenden Rotationsachse ausgebildet ist, wobei die Rotationsachse senkrecht zum Frontende (2) verläuft.

**4.** Magnetisch-induktive Durchflussmesssonde nach einem der vorhergehenden Ansprüche,

     wobei die magnetfelderzeugende Vorrichtung eine Spulenanordnung (9) und einen Spulenkern (7) umfasst, wobei die magnetfelderzeugende Vorrichtung mindestens eine Rückführung (10) umfasst, wobei der Spulenkern (7) an dem Frontende (2) endet, wobei der Spulenkern (7) zylindrisch, insbesondere kreiszylindrisch ausgebildet ist, wobei die Spulenanordnung (9) den Spulenkern (7) umschließt.

**5.** Magnetisch-induktive Durchflussmesssonde nach Anspruch 4,

     wobei die Rückführung (10) hohlzylindrisch ausgebildet ist, wobei die Rückführung (10) den Spulenkern (7) und die Spulenanordnung (9) zumindest teilweise umschließt.

**6.** Magnetisch-induktive Durchflussmesssonde nach einem der vorhergehenden Ansprüche,

     wobei zwischen den Messelektrodenpaaren jeweils eine Rückführung (10) angeordnet ist, wobei die Rückführungen (10) jeweils eine Längsachse aufweisen, wobei die Längsachsen jeweils zwischen einem Messelektrodenpaar senkrecht aus dem Frontende (2) austreten.

7. Magnetisch-induktive Durchflussmesssonde nach Anspruch 6,

   wobei die Rückführungen drehsymmetrisch um ein Drehzentrum angeordnet sind,
   wobei das Zentrum des Frontendes das Drehzentrum bildet.

8. Magnetisch-induktive Durchflussmesssonde nach einem der vorhergehenden Ansprüche, wobei die Mess- und Auswerteeinheit (11) dazu ausgebildet ist, anhand der höchsten Messspannung, in Bezug auf die an den jeweiligen Messelektroden anliegenden Messspannungen, einen Durchfluss und/oder eine Durchflussgeschwindigkeit zu ermitteln und einer Messelektrode, die nicht für die Ermittlung des Durchflusses und/oder der Durchflussgeschwindigkeit verwendet wird, die Funktion einer Bezugselektrode oder einer Füllstandsüberwachungselektrode oder einer Elektrode zur Bestimmung der Leitfähigkeit des Mediums zuzuordnen.

9. Messstelle zur Ermittlung eines Durchflusses und/oder einer Durchflussgeschwindigkeit eines Mediums, umfassend:

   - eine Rohrleitung (13), welche das Medium in eine durch eine Rohrachse definierte Längsrichtung (21) führt; und
   - eine Öffnung in einer Wandung der Rohrleitung (13);
   **dadurch gekennzeichnet, dass** eine magnetisch-induktive Durchflussmesssonde (1) nach einem der vorhergehenden Ansprüche durch die Öffnung in die Rohrleitung (13) eingebracht ist,
   wobei die Mess- und/oder Auswerteeinheit (11) dazu eingerichtet ist, den Durchfluss und/oder die Durchflussgeschwindigkeit und den Einbauwinkel $\alpha$ zu ermitteln.

**Claims**

1. A magneto-inductive flow probe for determining the flow and/or the flow velocity of a medium in a pipeline, comprising:

   - A front part (25) with a front end (2) which has a center (6);
   - a housing (3);
   - a magnetic-field-generating device arranged in the housing (3) for generating a magnetic field which goes through the front end (2); and
   - a measuring and evaluation unit (11);

**characterized in that**

three measuring electrodes (4, 5, 16), each of which establishes galvanic contact with the medium, are arranged on the front end (2), forming precisely three pairs of measuring electrodes, and **in that** the measuring and evaluation unit (11) is configured to determine an induced measuring voltage at each of the three pairs of measuring electrodes, to determine an installation angle $\alpha$ as a function of two of the three detected measuring voltages, and to determine the flow and/or the flow velocity of the medium as a function of the measuring voltage applied to one pair of measuring electrodes and as a function of the installation angle $\alpha$,
wherein the installation angle $\alpha$ is delineated by a straight line (19) which intersects a pair of measuring electrodes and an ideal straight line (18) which is perpendicular to the flow direction of the medium flowing through the pipeline.

2. The magneto-inductive flow probe as claimed in claim 1,
   wherein the measuring electrodes (4, 5, 16) are arranged such that they are rotationally symmetrical around a center of rotation, wherein the center (6) of the front end (2) forms the center of rotation.

3. The magneto-inductive flow probe as claimed in one of the preceding claims,

   wherein the housing (3) has a cylindrical design, in particular a circular cylindrical design, with an axis of rotation which runs through the center (6) of the front end (2),
   wherein the axis of rotation runs perpendicular to the front end (2).

4. The magneto-inductive flow probe as claimed in one of the preceding claims,

   wherein the magnetic-field-generating device comprises a coil assembly (9) and a coil core (7),
   wherein the magnetic-field-generating device comprises at least one return (10),
   wherein the coil core (7) ends at the front end (2),
   wherein the coil core (7) has a cylindrical design, in particular a circular cylindrical design,
   wherein the coil assembly (9) surrounds the coil core (7).

5. The magneto-inductive flow probe as claimed in claim 4,

   wherein the return (10) has a hollow cylindrical design,
   wherein the return (10) at least partly surrounds the coil core (7) and the coil assembly (9).

6. The magneto-inductive flow probe as claimed in one of the preceding claims,

wherein a return (10) is arranged between each pair of measuring electrodes, wherein each return (10) has a longitudinal axis,
wherein each longitudinal axis between a pair of measuring electrodes exits vertically out of the front end (2).

7. The magneto-inductive flow probe as claimed in claim 6,
wherein the returns are arranged such that they are rotationally symmetrical around a center of rotation,
wherein the center of the front end forms the center of rotation.

8. The magneto-inductive flow probe as claimed in one of the preceding claims,
wherein the measuring and evaluation unit (11) is configured to determine a flow and/or a flow velocity as a function of the highest measuring voltage, in relation to the measuring voltages applied to each measuring electrode, and to assign to a measuring electrode, which is not used to determine the flow and/or the flow velocity, the function of a reference electrode or a fill level monitoring electrode or an electrode for determining the conductivity of the medium.

9. A measuring point for determining a flow and/or a flow velocity of a medium, comprising:

- A pipeline (13), which conducts the medium in a longitudinal direction (21) defined by a pipe axis; and
- an opening in a wall of the pipeline (13);
**characterized in that** a magneto-inductive flow probe (1) as claimed in one of the preceding claims is inserted through the opening and into the pipeline (13),
wherein the measuring and/or evaluation unit (11) is configured to determine the flow and/or the flow velocity and the installation angle α.

**Revendications**

1. Sonde de mesure de débit électromagnétique destinée à la détermination du débit et/ou de la vitesse d'écoulement d'un produit s'écoulant dans une conduite, laquelle sonde comprend :

- une partie frontale (25) avec une extrémité frontale (2) s'étendant vers un centre (6) ;
- un boîtier (3) ;

- un dispositif de génération de champ magnétique disposé dans le boîtier (3) et destiné à générer un champ magnétique traversant l'extrémité frontale (2) ; et
- une unité de mesure et d'évaluation (11) ;

**caractérisée**

**en ce que**, sur l'extrémité frontale (2) sont disposées trois électrodes de mesure (4, 5, 16) formant chacune un contact galvanique avec le produit, lesquelles électrodes forment exactement trois paires d'électrodes de mesure,
et **en ce que** l'unité de mesure et d'évaluation (11) est conçue pour mesurer une tension induite sur chacune des trois paires d'électrodes de mesure, pour déterminer un angle de montage α en fonction de deux des trois tensions mesurées et pour déterminer le débit et/ou la vitesse d'écoulement du produit en fonction de la tension de mesure appliquée à une paire d'électrodes de mesure et de l'angle de montage α, l'angle de montage α étant défini par une droite (19) coupant une paire d'électrodes de mesure et une droite idéale (18) perpendiculaire à la direction d'écoulement du produit s'écoulant à travers la conduite.

2. Sonde de mesure de débit électromagnétique selon la revendication 1,

pour laquelle les électrodes de mesure (4, 5, 16) sont disposées de manière symétrique en rotation autour d'un centre de rotation,
le centre (6) de l'extrémité frontale (2) formant le centre de rotation.

3. Sonde de mesure de débit électromagnétique selon l'une des revendications précédentes,

pour laquelle le boîtier (3) est cylindrique, notamment cylindrique circulaire, avec un axe de rotation passant par le centre (6) de l'extrémité frontale (2),
l'axe de rotation étant perpendiculaire à l'extrémité frontale (2).

4. Sonde de mesure de débit électromagnétique selon l'une des revendications précédentes,

pour laquelle le dispositif de génération de champ magnétique comprend un arrangement de bobines (9) et un noyau de bobine (7),
le dispositif de génération de champ magnétique comprenant au moins un retour (10),
le noyau de bobine (7) se terminant à l'extrémité frontale (2),
le noyau de bobine (7) étant de forme cylindrique, notamment de forme cylindrique circulaire, l'arrangement de bobines (9) entourant le noyau de bobine (7).

5. Sonde de mesure de débit électromagnétique selon la revendication 4,

pour laquelle le retour (10) est réalisé sous forme de cylindre creux,
le retour (10) entourant au moins partiellement le noyau de bobine (7) et
l'arrangement de bobines (9).

6. Sonde de mesure de débit électromagnétique selon l'une des revendications précédentes,

pour laquelle un retour (10) est respectivement disposé entre les paires d'électrodes de mesure,
les retours (10) présentant respectivement un axe longitudinal,
les axes longitudinaux sortant respectivement entre une paire d'électrodes de mesure perpendiculairement de l'extrémité frontale (2).

7. Sonde de mesure de débit électromagnétique selon la revendication 6,

pour laquelle les retours sont disposés de manière symétrique en rotation autour d'un centre de rotation,
le centre de l'extrémité frontale formant le centre de rotation.

8. Sonde de mesure de débit électromagnétique selon l'une des revendications précédentes,
pour laquelle l'unité de mesure et d'évaluation (11) est conçue pour déterminer un débit et/ou une vitesse d'écoulement à l'aide de la tension de mesure la plus élevée par rapport aux tensions de mesure appliquées aux électrodes de mesure respectives, et pour attribuer à une électrode de mesure, laquelle n'est pas utilisée pour la détermination du débit et/ou de la vitesse d'écoulement, la fonction d'une électrode de référence ou d'une électrode de surveillance du niveau ou d'une électrode destinée à déterminer la conductivité du produit.

9. Cellule de mesure destinée à la détermination d'un débit et/ou d'une vitesse d'écoulement d'un produit, laquelle cellule comprend :

- une conduite (13), laquelle guide le produit dans une direction longitudinale (21) définie par un axe de conduite ; et
- une ouverture dans une paroi de la conduite (13) ;
**caractérisée en ce qu'**une sonde de mesure de débit électromagnétique (1) selon l'une des revendications précédentes est introduite dans la conduite (13) à travers l'ouverture,
l'unité de mesure et/ou d'évaluation (11) étant conçue pour déterminer le débit et/ou la vitesse d'écoulement ainsi que l'angle de montage.

1

25  3  11

8  4  9

2  7  10

5  12

**Fig.1**

5

10

4

7

2  9

6  16

**Fig.2**

Fig. 3

Fig. 4

Fig. 5

Fig. 6

EP 3 899 438 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0534003 A1
- EP 0892251 A1
- US 3881350 A
- DE 3707138 A1
- US 3308659 A